# EUROPEAN PATENT SPECIFICATION

(11) **EP 3 181 863 B1**
(45) Date of publication and mention of the grant of the patent: **10.04.2019**
(21) Application number: 16204886.2
(22) Date of filing: 16.12.2016
(51) Int. Cl.: F02C 7/045

(54) **GAS TURBINE ENGINE WITH MINIMIZED INLET DISTORTION**
GASTURBINENMOTOR MIT MINIMIERTER EINLASSVERZERRUNG
MOTEUR À TURBINE À GAZ AVEC DISTORSION D'ENTRÉE RÉDUITE AU MINIMUM

(30) Priority: 18.12.2015 US 201514974112
(43) Date of publication of application: 21.06.2017
(73) Proprietor: United Technologies Corporation, Farmington, CT 06032 (US)
(72) Inventor: QIU, Yuan J., Glastonbury, CT Connecticut 06033 (US); ALI, Amr, South Windsor, CT Connecticut 06074 (US); ZYSMAN, Steven H., Amston, CT Connecticut 06231 (US)
(74) Representative: Dehns

(56) References cited:
- WO-A1-2014/137685
- GB-A- 2 372 019
- US-A1- 2010 276 007
- US-A1- 2015 044 028

## Description

### BACKGROUND OF THE INVENTION

This application relates to a gas turbine engine having minimized inlet distortion.

Gas turbine engines are known and typically include a fan delivering air into a bypass duct as propulsion air and into a compressor as core flow. The air is compressed in the compressor and delivered into a combustor where it is mixed with fuel and ignited. Products of this combustion pass downstream over turbine rotors, driving them to rotate.

Recently, a gear reduction has been incorporated between a fan drive turbine and the fan rotor. This has increased the design freedom for the gas turbine engine designer. In particular, the fan can now be made to rotate slower than the turbine. With this change, the diameter of the fan has increased.

It has recently been proposed to provide a gas turbine engine, where the inlet or area of a surrounding housing or nacelle forward of the fan rotor, is shorter than in the past. Providing a shorter inlet reduces the weight of the engine and also reduces external drag. Other benefits include reducing a bending moment and corresponding load on an engine structure during flight conditions such as takeoff. Further, by making the inlet shorter, the overall envelope of the engine is reduced.

However, the shorter inlets raise various challenges including a decreased ability to attenuate noise generated by the engine.

GB 2372019 A discloses a prior art gas turbine engine as set forth in the preamble of claim 1.

US 2010/276007 A1 discloses another prior art gas turbine engine.

### SUMMARY OF THE INVENTION

According to the present invention, there is provided a gas turbine engine as set forth in claim 1.

In an embodiment, a second distance may be defined from the forwardmost edges of the fan blades to a plane extending through the throat or the point of inflection. The plane is defined perpendicular to the center axis, and the axially symmetric surface are formed over between 110% and 90% of the second distance.

In another embodiment according to any of the previous embodiments, axial symmetry is defined as being within a manufacturing tolerance.

In another embodiment according to any of the previous embodiments, the manufacturing tolerance is +/- 0.1 inch (0.254 centimeters).

In another embodiment according to any of the previous embodiments, the axially symmetric surface occurs over at least 350° of a circumference of the nacelle defined about the center axis.

In another embodiment according to any of the previous embodiments, the ratio is greater than about 0.25.

In another embodiment according to any of the previous embodiments, the ratio is greater than about 0.30.

In another embodiment according to any of the previous embodiments, the ratio is less than about 0.40.

In another embodiment according to any of the previous embodiments, the first distance measured to the one portion of the nacelle still results in a ratio less than about 0.45, and the first distance being measured to the other portion of the nacelle still results in the ratio being greater than about 0.2.

In another embodiment according to any of the previous embodiments, a fan drive turbine drives the fan rotor through a gear reduction.

In another embodiment according to any of the previous embodiments, a gear ratio of the gear reduction is greater than about 2.3.

In another embodiment according to any of the previous embodiments, a pressure ratio across the fan drive turbine is greater than about 5.

In another embodiment according to any of the previous embodiments, a pressure ratio across the fan drive turbine is greater than about 5.

In another embodiment according to any of the previous embodiments, the fan rotor delivers air into a bypass duct as bypass air, and into a core engine including a compressor, and a bypass ratio is defined as the volume of air being delivered into the bypass duct to the volume of air delivered into the core engine, with the bypass ratio being greater than about 6.

These and other features may be best understood from the following drawings and specification.

### BRIEF DESCRIPTION OF THE DRAWINGS

Figure 1 schematically shows an embodiment of a gas turbine engine.
Figure 2 shows a challenge in short inlet engines.
Figure 3 shows a first embodiment.

### DETAILED DESCRIPTION

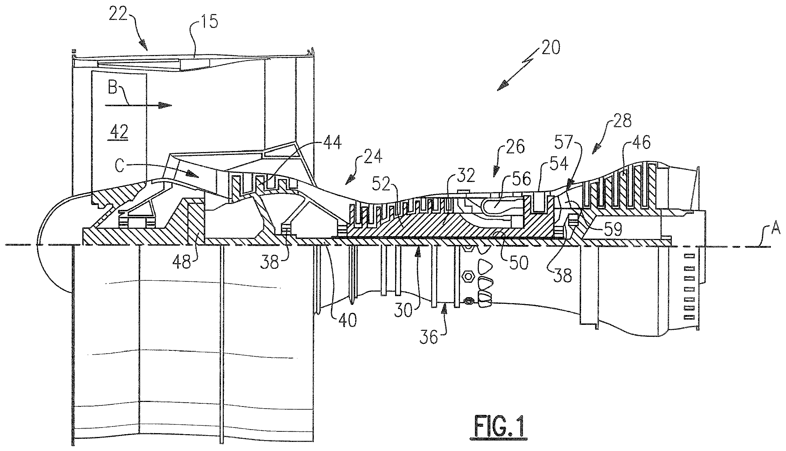

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 R)]^{1.5} (where °R = K x 9/5). The "Low corrected fan tip speed" as disclosed herein according to one non-limiting embodiment is less than about 1150 ft / second (350.5 meters/second).

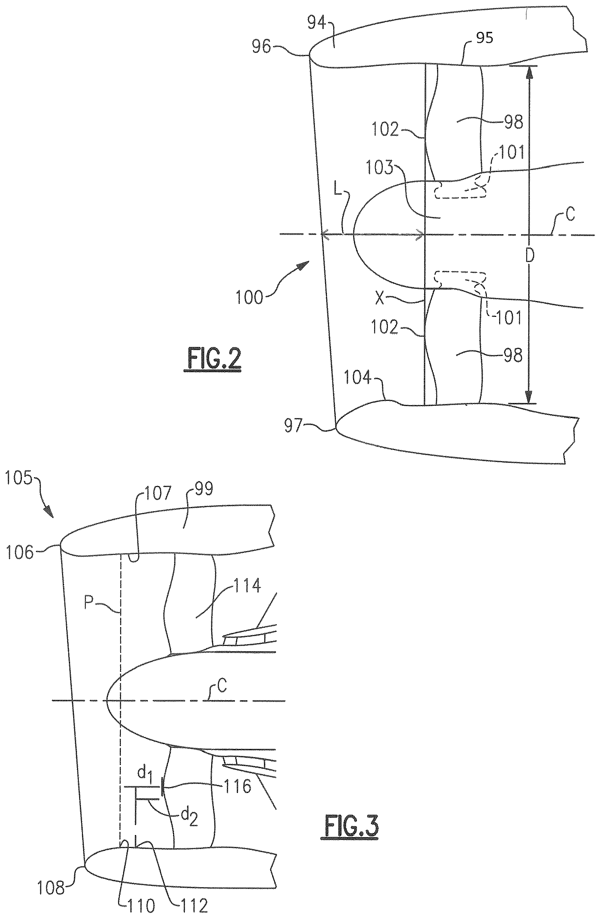

Figure 2 shows an engine 100 known as a short inlet engine. As shown, a nacelle 94 has forwardmost ends 96 and 97. As can be seen, the forwardmost ends do not necessarily lie in a common plane perpendicular to a center axis of the engine. Rather, point 96 is further forward than point 97. Fan blades 98 have an outer diameter 95. The nacelle 94 is shown to have a radially inwardly extending innermost point 104. Point 104 is radially inward of the outer diameter 95 of the fan blade 98. As shown schematically, the fan blades 98 have a root section 101 received in a hub 103 of the fan rotor. Due to the radially innermost point 104, and the mounting of the blade, it could be difficult to remove a fan blade 98 from the engine.

The short inlet is defined by a distance L measured from: (a) a plane X perpendicular to a central axis C, which plane also being tangent to a leading edge or forwardmost point 102 of the fan blade 98 to (b) a plane defined by the forwardmost points (including ends 96, 97) of the nacelle 94. A ratio is defined of L:D with D being the outer diameter of the fan blades 98.

In one embodiment L:D is between about 0.2 and about 0.45. Alternatively, the ratio may be greater than about 0.25 and in alternative embodiments greater than about 0.30. In embodiments, the ratio of L:D may be less than about 0.40.

As can be appreciated, the L:D quantity would be different if measured to the forwardmost point 96 than to the forwardmost point 97. However, in embodiments the ratio at the forwardmost point 96 would still be less than about 0.45, and the ratio at the shortest forwardmost point 97 would still be greater than about 0.2.

Stated another way, the forwardmost end of the nacelle 94 extends outwardly for varying extents across the circumference of the nacelle, and the ratio of the L:D for all portions of the varying distance of the nacelle being between about 0.2 and about 0.45.

The several embodiments provide the benefits of the short inlet and allow freedom of design of the inner periphery of the nacelle, while still facilitating removal of the fan blade.

Figure 3 shows an engine embodiment 105 having a nacelle 99. The different distances to the forwardmost ends 106 and 108 result in a nacelle configuration having a feature called "droop." Within a nacelle having droop, certain contouring of the inner periphery is required that is different at the points 106 and 108. It should be understood that this is also true at locations circumferentially between the two points, and the points 106 and 108 are the extreme forwardmost and extreme rearwardmost locations. Generally, the rearwardmost location 108 will be at 6:00 o'clock, or substantially bottom dead center when the engine is mounted on an aircraft.

It is generally desirable to have an axially symmetric surface at the inner periphery 107. However, this cannot be over the entirety of the surface given requirements of a nacelle having droop. Still, to minimize the amount of distortion for air heading into the inlet and toward the fan blades 114, the axially symmetric surfaces are maintained over as great a portion of the axial length as is possible. A plane P marks the beginning of the axially symmetric surfaces. The plane P is perpendicular to the center axis C, and passes through the throat 110 of the nacelle at substantially bottom dead center. That is, this is the radially smallest location 110 for the nacelle at the substantially bottom dead center measured from the center axis C. After passing this point, the axially symmetric surfaces begin. In an alternative, the beginning of the axially symmetric surface is at a point of inflection 112 at substantially bottom dead center. Generally, the point of inflection is defined as when a convex surface merges into as concave surface. While it is desirable that the axially symmetric surface begins at the point 110 or 112, a dimension d₁ or d₂ can be defined from the forwardmost or leading edge 116 of the fan blade 114 to the plane P, or to a similar plane that would pass through the point of inflection 112. In embodiments, the beginning of the axially symmetric surface covers between 90% and 110% of the distance d₁ or d_{2.}. Of course, the locations may be a bit removed but are taken at substantially (+/- 10°) bottom dead center.

The axial symmetric surface can be defined as having the entire surface (across its circumference) being symmetric at any axial point within a tolerance of +/- .1 inch (0.254 centimeters).

Another alternative way of describing the axially symmetric surface is that the axial symmetry would occur over at least 350° about the center axis C. That is, there may be localized components mounted over a very limited circumferential extent within the inner periphery 107 that move away from the symmetric surface by an amount greater than +/- .1 inch (0.254 centimeters).

By including the axially symmetric surface over such a great portion of the nacelle 94, the inlet distortion is reduced dramatically.

Although embodiments have been disclosed, a worker of ordinary skill in this art would recognize that certain modifications would come within the scope of this disclosure. For that reason, the following claims should be studied to determine the true scope and content of this invention.

## Claims

1. A gas turbine engine (20,100,105) comprising: a nacelle (94,99) and a fan rotor (42) carrying a plurality of fan blades (98,114), said nacelle (94,99) being formed such that one portion (96,106) extends axially further forward from said fan blades (98,114) than does another portion (97,108), and said nacelle (94,99) having an inner periphery (107) that is substantially axially symmetric about a center axis (C) of the fan rotor (42) from either a throat (110) of the nacelle (94,99) at a bottom dead center location, or a point of inflection (112) at which the inner periphery (107) of the nacelle (94,99) at substantially bottom dead center merges a convex portion into a concave portion, to forwardmost edges (102, 116) of the fan blades (98,114),
**characterised in that**:
a first distance (L) is defined from a plane (X) tangent to the forwardmost edges (102,116) of said fan blades (98,114) to a plane defined by forwardmost points (96,97,106,108) of said nacelle (94,99), and an outer diameter (D) of said fan blades (98,114) is defined, and a ratio of said first distance (L) to said outer diameter (D) is between 0.2 and 0.5.

2. The gas turbine engine as set forth in claim 1, wherein a second distance (d₁,d₂) is defined from the forwardmost edges (102,116) of said fan blades (98,114) to a plane (P) extending through said throat (110) or said point of inflection (112), said plane (P) being defined perpendicular to said center axis (C), and said axially symmetric surface (107) being formed over between 110% and 90% of said second distance (d₁,d₂).

3. The gas turbine engine as set forth in claim 1 or 2, wherein axial symmetry is defined as being within a manufacturing tolerance.

4. The gas turbine engine as set forth in claim 3, wherein said manufacturing tolerance is +/- 0.1 inch (0.254 centimeters).

5. The gas turbine engine as set forth in any preceding claim, wherein said axially symmetric surface (107) occurs over at least 350° of a circumference of said nacelle (94,99) defined about said center axis (C).

6. The gas turbine engine as set forth in any preceding claim, wherein said ratio is greater than 0.25.

7. The gas turbine engine as set forth in claim 6, wherein said ratio is greater than 0.30.

8. The gas turbine engine as set forth in any preceding claim, wherein said ratio is less than 0.40.

9. The gas turbine engine as set forth in any preceding claim, wherein the first distance (L) measured to the one portion (96,106) of said nacelle still results in said ratio being less than 0.45, and the first distance (L) measured to the other portion (97,108) of said nacelle (94,99) still results in said ratio being greater than 0.2.

10. The gas turbine engine as set forth in any preceding claim, wherein a fan drive turbine (46) drives said fan rotor (42) through a gear reduction (48).

11. The gas turbine engine as set forth in claim 10, wherein a gear ratio of said gear reduction (48) is greater than 2.3.

12. The gas turbine engine as set forth in any preceding claim, wherein said fan rotor (42) delivers air into a bypass duct as bypass air (B), and into a core engine including a compressor (24), and a bypass ratio being defined as the volume of air (B) being delivered into said bypass duct to the volume of air (C) delivered into said core engine at a cruise condition of about 0.8 Mach and about 10,668m, with said bypass ratio being greater than 6.

## Patentansprüche

1. Gasturbinentriebwerk (20, 100, 105), umfassend:
eine Gondel (94, 99) und einen Gebläserotor (42), der eine Vielzahl von Gebläseschaufeln (98, 114) trägt, wobei die Gondel (94, 99) so ausgebildet ist, dass ein Teil (96, 106) von den Gebläseschaufeln (98, 114) axial weiter nach vorne verläuft als ein anderer Teil (97,108), und wobei die Gondel (94, 99) einen Innenumfang (107) aufweist, der im Wesentlichen achsensymmetrisch um eine Mittelachse (C) des Gebläserotors (42) von entweder einer Verengung (110) der Gondel (94, 99) an einem unteren Totpunkt oder einem Wendepunkt (112), an dem der Innenumfang (107) der Gondel (94, 99) am im Wesentlichen unteren Totpunkt von einem konvexen Teil in einen konkaven Teil übergeht, zu vordersten Kanten (102, 116) der Gebläseschaufeln (98,114) ist,
**dadurch gekennzeichnet, dass**:
ein erster Abstand (L) von einer Ebene (X) tangential zu den vordersten Kanten (102, 116) der Gebläseschaufeln (98, 114) zu einer Ebene definiert ist, die durch vorderste Punkte (96, 97, 106, 108) der Gondel (94, 99) definiert ist, und ein Außendurchmesser (D) der Gebläseschaufeln (98, 114) definiert ist und ein Verhältnis des ersten Abstands (L) zum Außendurchmesser (D) zwischen 0,2 und 0,5 beträgt.

2. Gasturbinentriebwerk nach Anspruch 1, wobei ein zweiter Abstand (d₁, d₂) von den vordersten Kanten (102, 116) der Gebläseschaufeln (98, 114) zu einer Ebene (P), die durch die Verengung (110) oder den Wendepunkt (112) verläuft, definiert ist, wobei die Ebene (P) lotrecht zur Mittelachse (C) definiert ist, und wobei die achsensymmetrische Fläche (107) über zwischen 110 % und 90 % des zweiten Abstands (d₁, d₂) ausgebildet ist.

3. Gasturbinentriebwerk nach Anspruch 1 oder 2, wobei Achsensymmetrie im Rahmen einer Fertigungstoleranz definiert ist.

4. Gasturbinentriebwerk nach Anspruch 3, wobei die Fertigungstoleranz +/- 0,1 Zoll (0,254 Zentimeter) beträgt.

5. Gasturbinentriebwerk nach einem der vorstehenden Ansprüche, wobei die achsensymmetrische Fläche (107) über mindestens 350° eines Umfangs der Gondel (94, 99), die um die Mittelachse (C) definiert ist, auftritt.

6. Gasturbinentriebwerk nach einem der vorstehenden Ansprüche, wobei das Verhältnis größer als 0,25 ist.

7. Gasturbinentriebwerk nach Anspruch 6, wobei das Verhältnis größer als 0,30 ist.

8. Gasturbinentriebwerk nach einem der vorstehenden Ansprüche, wobei das Verhältnis kleiner als 0,40 ist.

9. Gasturbinentriebwerk nach einem der vorstehenden Ansprüche, wobei der erste Abstand (L) gemessen zu dem einen Teil (96, 106) der Gondel immer noch dazu führt, dass das Verhältnis kleiner als 0,45 ist, und der erste Abstand (L) gemessen zum anderen Teil (97, 108) der Gondel (94, 99) immer noch dazu führt, dass das Verhältnis größer als 0,2 ist.

10. Gasturbinentriebwerk nach einem der vorstehenden Ansprüche, wobei eine Gebläseantriebsturbine (46) den Gebläserotor (42) über eine Untersetzung (48) antreibt.

11. Gasturbinentriebwerk nach Anspruch 10, wobei ein Übertragungsverhältnis der Untersetzung (48) größer als 2,3 ist.

12. Gasturbinentriebwerk nach einem der vorstehenden Ansprüche, wobei der Gebläserotor (42) Luft in einen Bypass-Kanal als Bypass-Luft (B) und in ein Kerntriebwerk einschließlich eines Verdichters (24) liefert, und ein Bypass-Verhältnis als das Luftvolumen (B), das in den Bypass-Kanal geliefert wird, zum Luftvolumen (C), das in das Kerntriebwerk geliefert wird, bei einer Reiseflugbedingung von etwa 0,8 Mach und etwa 10.668 m definiert ist, wobei das Bypass-Verhältnis größer als 6 ist.

## Revendications

1. Moteur à turbine à gaz (20, 100, 105) comprenant :
une nacelle (94, 99) et un rotor de soufflante (42) supportant une pluralité d'aubes de soufflante (98, 114), ladite nacelle (94, 99) étant formée de sorte qu'une première partie (96, 106) s'étend axialement plus en avant à partir desdites aubes de soufflante (98, 114) qu'une autre partie (97, 108), et ladite nacelle (94, 99) ayant une périphérie interne (107) qui est sensiblement axialement symétrique autour d'un axe central (C) du rotor de soufflante (42) à partir soit d'un col (110) de la nacelle (94, 99) au niveau d'un emplacement de point mort bas, soit d'un point d'inflexion (112) au niveau duquel la périphérie interne (107) de la nacelle (94, 99) sensiblement au niveau du point mort bas relie une partie convexe dans une partie concave, jusqu'à des bords les plus avant (102, 116) des aubes de soufflante (98, 114),
**caractérisé en ce que** :
une première distance (L) est définie à partir d'un plan (X) tangent aux bords les plus avant (102, 116) desdites aubes de soufflante (98, 114) jusqu'à un plan défini par des points les plus avant (96, 97, 106, 108) de ladite nacelle (94, 99), et un diamètre externe (D) desdites aubes de soufflante (98, 114) est défini, et un rapport de ladite première distance (L) audit diamètre externe (D) va de 0,2 à 0,5.

2. Moteur à turbine à gaz selon la revendication 1, dans lequel une seconde distance (d₁, d₂) est définie à partir des bords les plus avant (102, 116) desdites aubes de soufflante (98, 114) jusqu'à un plan (P) s'étendant à travers ledit col (110) ou ledit point d'inflexion (112), ledit plan (P) étant défini perpendiculairement audit axe central (C), et ladite surface axialement symétrique (107) étant formée sur 110 % à 90 % de ladite seconde distance (d₁, d₂).

3. Moteur à turbine à gaz selon la revendication 1 ou 2, dans lequel une symétrie axiale est définie comme étant dans une tolérance de fabrication.

4. Moteur à turbine à gaz selon la revendication 3, dans lequel ladite tolérance de fabrication est de +/- 0,1 pouce (0,254 centimètres).

5. Moteur à turbine à gaz selon une quelconque revendication précédente, dans lequel ladite surface axialement symétrique (107) apparaît sur au moins 350° d'une circonférence de ladite nacelle (94, 99) définie autour dudit axe central (C).

6. Moteur à turbine à gaz selon une quelconque revendication précédente, dans lequel ledit rapport est supérieur à 0,25.

7. Moteur à turbine à gaz selon la revendication 6, dans lequel ledit rapport est supérieur à 0,30.

8. Moteur à turbine à gaz selon une quelconque revendication précédente, dans lequel ledit rapport est inférieur à 0,40.

9. Moteur à turbine à gaz selon une quelconque revendication précédente, dans lequel la première distance (L) mesurée jusqu'à la première partie (96, 106) de ladite nacelle résulte toujours en ce que ledit rapport est inférieur à 0,45, et ladite première distance (L) mesurée jusqu'à l'autre partie (97, 108) de ladite nacelle (94, 99) résulte toujours en ce que ledit rapport est supérieur à 0,2.

10. Moteur à turbine à gaz selon une quelconque revendication précédente, dans lequel une turbine d'entraînement de soufflante (46) entraîne ledit rotor de soufflante (42) par l'intermédiaire d'un couple réducteur (48).

11. Moteur à turbine à gaz selon la revendication 10, dans lequel un rapport de démultiplication dudit couple réducteur (48) est supérieur à 2,3.

12. Moteur à turbine à gaz selon une quelconque revendication précédente, dans lequel ledit rotor de soufflante (42) achemine de l'air dans un conduit de dérivation en tant qu'air de dérivation (B), et dans un moteur de base comprenant un compresseur (24), et un rapport de dérivation défini en tant que le volume d'air (B) acheminé dans ledit conduit de dérivation par rapport au volume d'air (C) acheminé dans ledit moteur de base dans un régime de croisière d'environ 0,8 Mach et à environ 10 668 m, ledit rapport de dérivation étant supérieur à 6.
